(19) Europäisches Patentamt
European Patent Office
Office européen des brevets

(11) **EP 4 745 547 A1**

(12) **EUROPEAN PATENT APPLICATION**

(43) Date of publication:
**20.05.2026 Bulletin 2026/21**

(21) Application number: **24306907.7**

(22) Date of filing: **14.11.2024**

(51) International Patent Classification (IPC):
*G01L 1/12* (2006.01)    *G01L 5/22* (2006.01)

(52) Cooperative Patent Classification (CPC):
**G01L 1/122; G01L 5/228**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Université de Montpellier**
**34090 Montpellier (FR)**

• **Centre National de la Recherche Scientifique**
**75016 Paris (FR)**

(72) Inventors:
• **KHEDDAR, Abderrahmane**
**34090 MONTPELLIER (FR)**
• **YAN, Youcan**
**34095 MONTPELLIER (FR)**

(74) Representative: **Santarelli**
**Tour Trinity**
**1 bis Place de la Défense**
**92400 Courbevoie (FR)**

(54) **3D TACTILE SENSORS**

(57)    The invention relates to a tactile sensor (100) comprising three superimposed layers:
- a bottom layer (200) comprising a support (210) provided with a magnetic sensor (220) configured to detect a change in magnetic field;
- a top layer (400) comprising at least one flexible magnetic film (410,420),
- an intermediate layer (300) between the bottom layer (200) and the top layer (400), said intermediate layer being flexible.

The tactile sensor (100) is configured so that, when an external force is applied on the top layer (400), said top layer is deformed, this deformation causing changes in the magnetic field that can be detected by the magnetic sensor (220).

The top layer (400) has a magnetization pattern arranged to face the magnetic sensor (220), and said magnetization pattern is arranged to correspond to the sum of two magnetization patterns arranged in a Halbach array and orthogonal to each other.

Fig. 7

EP 4 745 547 A1

**Description**

**Technical field of the invention**

The present invention relates to sensing technology. More particularly, the invention relates to soft tactile sensors that use the deformation of a magnetic material to provide feedback about its contact with the environment.

**Prior art**

Tactile sensing is paramount for many applications that require contact knowledge extraction/sampling (e.g., contact location, interaction forces and their distribution) for decision making or intelligent control. Examples of such applications are robotics, human-robot interaction, prosthetics, wearable robotics, haptic devices at large, and health monitoring. In many use-cases, tactile sensors must not only be soft, but also compact and capable of measuring both normal and shear forces, akin to human skin. Additionally, it should be easy to fabricate and calibrate. Though recent decades have seen remarkable advancements in soft pressure sensors, the development of soft sensors capable of detecting multi-directional forces (i.e., multi-axis force sensing) is still challenging.

The primary challenge in multi-axis tactile sensing is not merely producing sensor outputs for both normal and shear loads but efficiently decoupling-or independently measuring-the normal and shear force components. Considering that the majority of today's multi-axis force sensors have a rigid structure, thereby limiting their applicability in various fields, many soft multi-axis tactile sensors have been developed, based on a variety of transduction principles, including capacitance, resistance, optics, and magnetics.

The strategies for force decoupling in these sensors can be broadly categorized into two:

(i) at the hardware level, which separates mechanically distinct sensing units that are sensitive to stimuli in single directions; and
(ii) at the software level, which employs data fitting methods to decouple raw sensor readings.

Hardware-level decoupling often leads to intricate sensor designs, given the necessity for multiple sensing units, as seen in capacitive and resistive sensors consisting of numerous capacitors or resistors.

Conversely, software-level decoupling might permit a streamlined sensor architecture but can complicate the calibration process. For instance, assuming a minimum of $N$ data points (typically $N \geq 10$) are required to calibrate force components in each direction, a non-mechanically decoupled tactile sensor would demand at least $N^2$ data if the raw sensor outputs exhibit radial symmetry at any angle in the polar coordinates, and $N^3$ data for outputs lacking symmetry. This could elongate the data collection process, and there is an increased risk of model overfitting as $N$ increases.

**Summary of the invention**

The present invention aims to remedy the aforementioned drawbacks.

To this end, the invention relates to a tactile sensor comprising three superimposed layers:

- a bottom layer comprising a support provided with a magnetic sensor configured to detect a change in magnetic field;
- a top layer comprising at least one flexible magnetic film, and
- an intermediate layer between the bottom layer and the top layer, said intermediate layer being flexible,

the tactile sensor being configured so that, when an external force is applied on the top layer, said top layer is deformed, this deformation causing changes in the magnetic field that can be detected by the magnetic sensor, characterized in that the top layer has a magnetization pattern arranged to face the magnetic sensor, and said magnetization pattern is arranged to correspond to the sum of two magnetization patterns arranged in a Halbach array and orthogonal to each other.

By using the self-decoupling property of the Halbach array, the magnetization pattern is leveraged to decouple the three-axis external forces exerted on the tactile sensor. Such a tactile sensor can thus self-decouple the three-axis external forces exerted on it.

Moreover, the tactile sensor has a simple sensor structure.

The tactile sensor with its self-decoupling capability can advantageously mimic the force sensing abilities of human skin.

In particular embodiments, the invention also has the following features, implemented separately or in any of their technically-feasible combinations.

In particular embodiments of the invention, the top layer comprises two superimposed flexible magnetic films, each flexible magnetic film being a sinusoidally magnetized magnetic film whose magnetization pattern is arranged in a Halbach array, and the magnetization pattern of the two flexible magnetic films being orthogonal to each other. Each film has thus a magnetization pattern that is easy to produce.

In particular embodiments of the invention, each flexible magnetic film of the top layer is made from magnetic powders dispersed within a deformable material.

In particular embodiments of the invention, the bottom layer is a flexible layer. The tactile sensor can thus easily adapt to the surface on which it is positioned.

In particular embodiments of the invention, the bottom layer is a flexible printed circuit board.

In particular embodiments of the invention, the support of the bottom layer is a hard printed circuit board. In particular embodiments of the invention, to improve the resolution of the tactile sensor, the bottom layer comprises a plurality of superimposed supports, each support being provided with a magnetic sensor configured to detect a change in magnetic field, the magnetic sensors of the supports being superimposed on one another.

In particular embodiments of the invention, the bottom layer comprises a support provided with a plurality of magnetic sensors, each magnetic sensor being configured to detect a change in magnetic field, the top layer having a magnetization pattern arranged to face each magnetic sensor. The tactile sensor has thus an increased sensing area.

In particular embodiments of the invention, the intermediate layer is made with an elastomer material. Such an intermediate layer can partially absorb an external force that could be applied to the top layer and/or restore the top layer to an original state. The choice of its thickness h and its elastic modulus affects the sensitivity and the measurement range of the tactile sensor. The invention is also relative to the use of a tactile sensor as described above to measure the force distribution on an artificial knee joint.

The invention is also relative to the use of a tactile sensor as described above to teach a robot by means of human physical demonstration.

The invention is also relative to the use of a tactile sensor as described above to monitor the interaction forces in knee braces.

**Brief description of the figures**

The invention will be better understood upon reading the following description, given as a non-limiting example, and made with reference to the following figures:

Figure 1 shows two examples of a tactile sensor according to the invention;
Figure 2 shows the working mechanism of a single taxel under external force F;
Figure 3 shows the illustration of the superposition principle of two sinusoidally magnetized flexible magnetic films;
Figure 4 shows in view a), the relationship between the tactile sensor's sensitivity along the z axis and the thickness h, elastic modulus E of the intermediate layer, at different magnetic periods T; in view b), the relationship between the tactile sensor's measurement range and the parameters h, E, at different magnetic periods T; in view c), the attenuation curve of the magnetic strength along the z direction at different magnetic periods T;
Figure 5 shows the illustration of the deformation of a sensing unit under an external force F;
Figure 6 shows in view a), the normalized absolute error (NAE) of measured and fitted B, $R_{xz}$, and $R_{yz}$ values at different magnetic periods T; in view b), the relationship between the force estimation error and the magnetic period T;
Figure 7 shows an example of a tibia-shaped tactile sensor designed for knee force distribution measurements;
Figure 8 shows the three-axis force distribution measurement principle;
Figure 9 shows the knee force distribution measurement using the tactile sensor, of figure 8, with, in view a), the setup for knee force distribution measurement; in view b), the force measurements of the tactile sensor when the femur undergoes rotational and translational movements; and in view c), the 3D force distribution measurements at moment *t*, captured during the femur's flexion and rightward sliding motion;
Figure 10 shows an example of tactile sensor array used for robot teaching;
Figure 11 shows a robot teaching using the tactile sensor of figure 11, with in view a) the steps for teaching a robot to make coffee, and in view b) the presentation of the six-axis force and torque signals;
Figure 12 shows an example of a single tactile sensor for knee brace force monitoring;
Figure 13 shows a demonstration of knee brace force monitoring using the tactile sensor, with, in view a), interaction forces recorded by the tactile sensor mounted on the inner right side of the knee brace during various human activities, and in view b), interaction forces measured when the tactile sensor is positioned beneath the top strap of the brace during various human activities.

In these figures, identical reference numerals from one figure to another refer to identical or similar elements.

Moreover, for clarity, the drawings are not plotted to scale, unless stated otherwise.

## Description of the embodiments

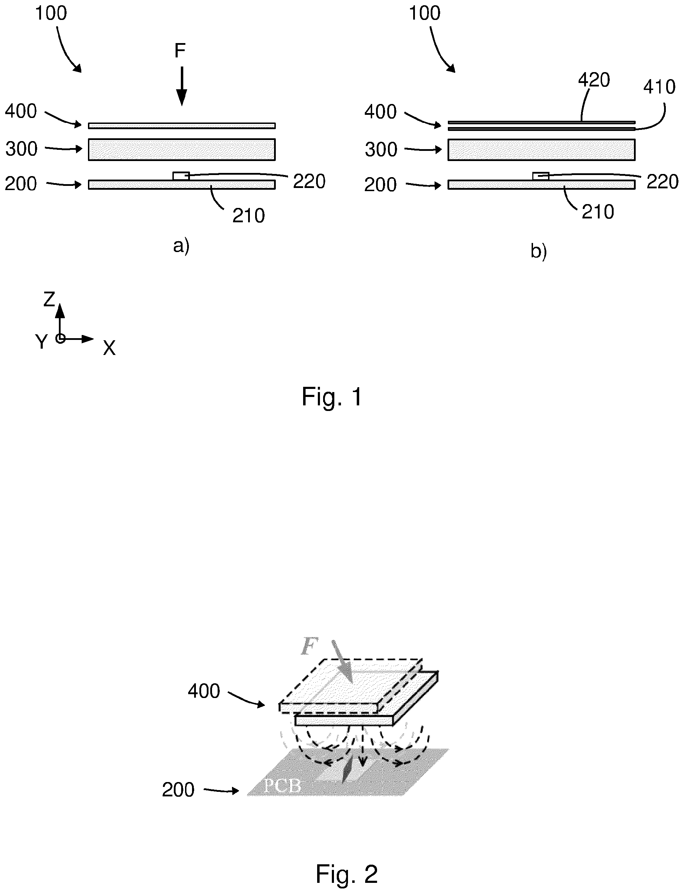

An example of a tactile sensor 100 conforming to the present invention is now described and illustrated in the figures. The tactile sensor 100 is a multi-layer structure, as illustrated in view a) of figure 1. The tactile sensor 100 comprises three superimposed layers:

- a bottom layer 200,
- an intermediate layer 300, and
- a top layer 400.

The bottom layer 200 comprises a support 210 provided with one magnetic sensor 220. The intermediate layer 300 is located between the bottom layer 200 and the top layer 400. The intermediate layer 300 is a flexible layer.

The top layer 400 comprises at least one flexible magnetic film.

The thickness of the tactile sensor 100 extends along a z axis.

The tactile sensor 100 is configured so that, when an external force F is applied on it, and more precisely, when an external force F is applied on the top layer 400, it results in a corresponding deformation of the top layer 400. This deformation of the top layer 400, in turn, alters the magnetic field distribution beneath it. These changes in the magnetic field distribution are detected by the magnetic sensor 220 of the bottom layer 200, as illustrated in figure 2. The magnetic sensor 220 outputs three-axis measurements of the magnetic flux densities represented as $Bx, By,$ and $Bz$ for the $x$, $y$, and $z$ directions respectively.

Bottom layer 200

The support 210 of the bottom layer 200 can be a hard printed circuit board (PCB) or a flexible printed circuit board.

The magnetic sensor 220 can be any sensor that can detect and measure a magnetic field.

In preferred embodiments, the magnetic sensor is a Hall sensor.

The magnetic field, measured by the magnetic sensor, is then converted to electric signals via the printed circuit board.

Intermediate layer 300

The intermediate layer 300 is made with a flexible material.

The intermediate layer is preferably a non-magnetic material.

The intermediate layer 300 is configured to partially absorb an external force that could be applied to the top layer and/or restore the top layer 400 to an original state.

The intermediate layer 300 has a thickness h and an elastic modulus E.

The choice of the material that constitute the intermediate layer 300, as well as its thickness h, depends on the desired sensitivity and measurement range of the tactile sensor 100, as explained later.

In preferred embodiment, the intermediate layer 300 is made with an elastomer material.

Elastomers commercially available under the name Dragon skin 20 or Ecoflex 00-50, from Smooth-on Inc., can be used, as in the applications that will be described later. Alternatively, any soft material can be used.

Top layer 400

The top layer 400 has a magnetization pattern arranged to face the magnetic sensor 220 of the bottom layer 200. This magnetization pattern is arranged to correspond to the sum of two magnetization patterns arranged in a Halbach array and orthogonal to each other.

This magnetization pattern produces a resultant magnetic field distribution that varies in both the normal (z-axis) and shear (x-axis and y-axis) directions, thus facilitating the measurement of both normal and shear forces.

This three-dimensionally varying magnetic field can subsequently be leveraged to decouple the three-axis external forces exerted on the tactile sensor 100.

The magnetization pattern of the top layer 400 can be obtained from only one flexible magnetic film or a plurality of superimposed flexible magnetic films.

In preferred embodiments, the flexible magnetic film(s) of the top layer 400 is (are) made from magnetic powders dispersed within a deformable material.

The deformable material is preferably an elastomer material.

For example, the elastomer material is a polydimethylsiloxane (PDMS).

A PDMS elastomer commercially available under the name Sylgard 184, from Dow Corning, can be used.

The magnetic powders are preferably neodymium magnetic powders.

In preferred embodiment, as illustrated in view b) of figure 1, the top layer 400 comprises two superimposed flexible magnetic films 410, 420. Each flexible magnetic film 410, 420 is a sinusoidally magnetized magnetic film whose magnetization pattern is arranged in a Halbach array. The magnetization patterns of the two flexible magnetic films 410, 420 are orthogonal to each other.

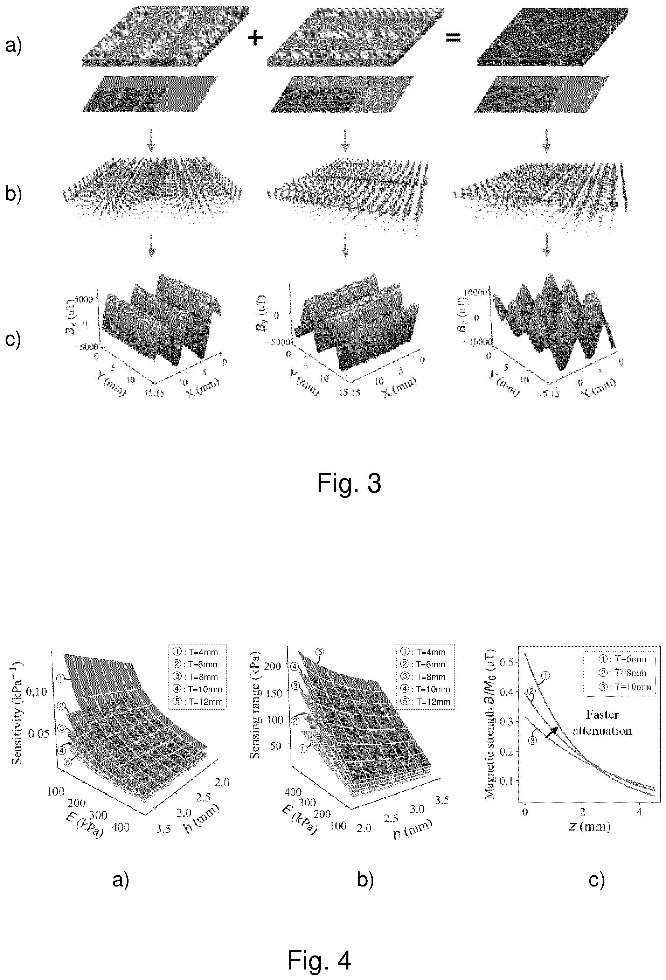

Figure 3 shows the illustration of the superposition principle of two sinusoidally magnetized flexible magnetic films 410, 420. View a) of figure 3 shows the visualization of the polarization pattern (displayed through a magnetic field viewing film) of two flexible magnetic films 410, 420 before and after superposition.

For example, a first flexible magnetic film 410 is sinusoidally magnetized along the *x* and *z* directions with a 90-degree phase shift, producing a magnetic field that varies along the *x* and z directions (symbolized as $B_{xz}$) as depicted in the left drawing in view a) of figure 3. This magnetic field is thus self-decoupled in terms of the magnetic strength $B_{xz}$ (i.e., only dependent on z direction) and the magnetic ratio $R_{xz}$ (i.e., ratio of *Bx* and *Bz,* only dependent on *x* direction), leveraging the magnetic properties of Halbach array.

A second flexible magnetic film 420 is similarly magnetized but along the y and z directions, yielding a magnetic field that varies in the y and z directions ($B_{yz}$) with two self-decoupled items in terms of the magnetic strength $B_{yz}$ (only dependent on z direction) and the magnetic ratio $R_{yz}$ (i.e., ratio of $B_y$ and $B_z$, only dependent on y direction), illustrated in the middle drawing in view a) of figure 3.

Utilizing the superposition principle, the overall magnetic field B beneath the magnetic film would be a vector sum of the two: B= $B_{xz}$+ $B_{yz}$ (see right drawing in view a) of figure 3). This three-dimensionally varying magnetic field can subsequently be leveraged to decouple the three-axis external forces exerted on the tactile sensor.

View b) of figure 3 shows the simulated magnetic field distribution under the magnetic film before and after superposition of the two flexible magnetic layers 410, 420.

View c) of figure 3 show the measured magnetic flux densities along x axis ($B_x$), y axis ($B_y$), and z axis ($B_z$) under the magnetic film after superposition of the two flexible magnetic layers 410, 420.

Preferably, the sinusoidal magnetization pattern of each flexible magnetic layer 410, 420 has the same period T.

The choice of the period of the sinusoidal magnetization pattern of each flexible magnetic layer depends on the desired sensitivity and measurement range of the tactile sensor, as explained later.

Sensitivity and measurement range of the tactile sensor 100

To optimize the performance of the tactile sensor 100 in terms of measurement range and sensitivity, several parameters may be considered, including the thickness h and the elastic modulus E of the intermediate layer, and the period T of the sinusoidal magnetization pattern of each flexible magnetic layer. Here, it was considered that the sinusoidal magnetization pattern of each flexible magnetic layer has the same period T.

The sensitivity $S_z$ along the z axis is defined as the ratio of the output change $\Delta(\Delta B\%)$ to the input change $\Delta P$, where $\Delta B\%$ is the change of the magnetic strength relative to its initial readings, and $\Delta P$ is the change of the pressure applied on the tactile sensor. Specifically, $S_z$ can be represented as follows:

$$S_z = \frac{h.(e^{2\pi.\Delta z/T}-1)}{E.\Delta z} \quad (1)$$

where $\Delta z$ is the displacement (or deformation) of the tactile sensor 100 along the *z* direction.

$S_z$ increases with the thickness h and decreases with the elastic modulus *E* and the period *T*.

View a) of figure 4 shows the relationship between the tactile sensor's sensitivity along the z axis ($S_z$) and the elastomer thickness h, the elastic modulus E, at different magnetic periods T (fitted with Equation (1) at $\Delta z$=0.5 mm).

Similar results (not shown) can be observed for sensitivities along the x and y directions. Using a thicker, softer intermediate layer 300 or a smaller period T for the top layer 400 could then enhance the sensitivity of the tactile sensor 100.

In addition, using a Hall sensor with a higher resolution setting could also enhance the sensitivity of the tactile sensor 100.

There is a tradeoff balance between the sensitivity and measurement range of the tactile sensor 100.

Assuming the deformation of the tactile sensor 100 is elastic, the maximum normal and shear forces that can be measured by the tactile sensor, based on Hooke's law, can be described as, respectively

$$F_{z\_max}=S\cdot E\cdot \Delta z_{max}/h$$

$$F_{x\_max} = S \cdot G \cdot \Delta x_{max}/h$$

$$F_{y\_max} = S \cdot G \cdot \Delta y_{max}/h$$

where S is the contact area and G is the shear modulus.

Here, the maximum displacement $\Delta z_{max}$=h (i.e., the thickness of the intermediate layer 300), $\Delta x_{max}$=T/4 (i.e., half period of $R_{xz}$), and the shear modulus G=E/(2(1+V)), where V is the Poisson's ratio of the isotropic material (~0.5 for the intermediate layer 300). As a result, for a specified contact area S, the maximum normal force $F_{z\_max}$ is directly proportional to the elastic modulus E, while the maximum shear force $F_{x\_max}$ (or $F_{y\_max}$) increases with E and T and decreases with h. View b) of figure 4 shows the relationship between the tactile sensor's measurement range (along the shear direction) and the three parameters h, E, and T.

This implies that the three parameters (h, E, and T) along with the resolution of the magnetic sensor 220 will affect the tactile sensor's sensitivity and measurement range in an opposite manner.

To cater to the unique requirements of different application scenarios, a distinct configuration of these parameters could then be employed.

Three-axis force decoupling principle

The developed three-axis force decoupling method utilizes the self-decoupling property of the Halbach array, streamlining both the tactile sensor structure and the calibration process.

As previously noted, under sinusoidally magnetized Halbach array, the magnetic strengths $B_{xz}$ and $B_{yz}$ and their corresponding magnetic ratios $R_{xz}$ and $R_{yz}$ are inherently self-decoupled. By combining two layers of Halbach array with orthogonal magnetization patterns, the resultant magnetic strength B and the magnetic ratios $R_{xz}$ and $R_{yz}$ beneath become self-decoupled. Specifically, when subjected to minor displacement loads along different directions, B is only dependent on the z direction, $R_{xz}$ on x direction, and $R_{yz}$ on y direction. This relationship can be succinctly expressed as follows after simplification:

$$\begin{bmatrix} B \\ R_{xz} \\ R_{yz} \end{bmatrix} = \begin{bmatrix} a_0 e^{kz} + b_0 \\ a_1 \tan(kx) + b_1 \\ a_2 \tan(ky) + b_2 \end{bmatrix} \quad (2)$$

where k is the wave number (k = $2\pi/T$), $a_0$, $a_1$, $a_2$ and $b_0$, $b_1$, $b_2$ are fitting coefficients.

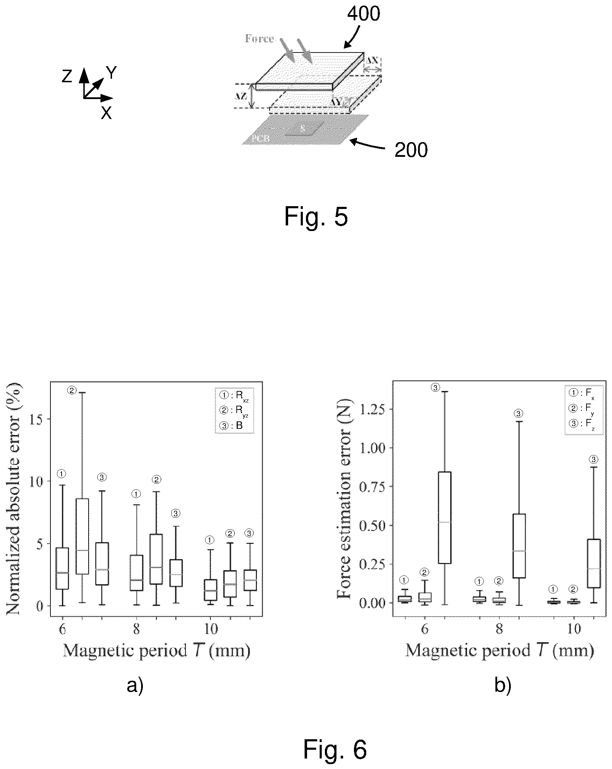

Assuming the sensor deforms from its initial position ($x_0$, $y_0$, $z_0$) to ($x_i$, $y_i$, $z_i$) due to an external force F, as shown in figure 5, this force vector can be computed in a decoupled manner as follows:

$$\begin{bmatrix} F_z \\ F_x \\ F_y \end{bmatrix} = \begin{bmatrix} \frac{a_z.S.E}{k.h} \ln \frac{B(z_i)-b_0}{B(z_0)-b_0} + b_z \\ \frac{a_x.S.G}{k.h}\left(arctan\frac{R_{xz}(x_i)-b_1}{a_1} - arctan\frac{R_{xz}(x_0)-b_1}{a_1}\right) + b_x \\ \frac{a_y.S.G}{k.h}\left(arctan\frac{R_{yz}(y_i)-b_2}{a_2} - arctan\frac{R_{yz}(y_0)-b_2}{a_2}\right) + b_y \end{bmatrix} \quad (3)$$

where S, E, G, and h are the contact area, the elastic modulus, the shear modulus, and the thickness of the elastomer layer, respectively; $a_x$, $a_y$, $a_z$ and $b_x$, $b_y$, $b_z$ are calibration coefficients.

This indicates that $F_z$ is solely dependent on $z_i$, $F_x$ on $x_i$, and $F_y$ on $y_i$, given that all other parameters are constant.

To assess the precision of Equation (3) in force estimation, the force estimation error in a 3D space has been analyzed (tested with Ecoflex 00-50 as the elastomer material of the intermediate layer 300). It has been observed that the force estimation error is close to zero for minor displacement loads, while it slightly increases with larger displacement loads ($\Delta X$ and $\Delta Y$ > 0.6 mm), with the root mean square error (RMSE) being 0.04 N for $F_x$, 0.03 N for $F_y$, and 0.49 N for $F_z$, respectively when $\Delta X$ and $\Delta Y$ <= 1 mm and $\Delta Z$ <= 1.5 mm.

The self-decoupling property of the magnetic field predominantly hinges on the period T (as per Equation (2)).

To understand how this parameter T influences the sensor's force decoupling performance, the raw sensor outputs and B, $R_{xz}$, $R_{yz}$ for T values of 6 mm, 8 mm, and 10 mm, respectively, have been examined.

View a) of figure 6 reveals that a larger T results in a reduced NAE values of B, $R_{xz}$, and $R_{yz}$, which, in turn, leads to a decreased force estimation error as shown in view b) of figure 6. Here the NAE is defined as, using B as an example, |($B_{fit}$-

$B_{true})|/(B_{true\_max} - B_{true\_min}) \times 100\%$, where $B_{fit}$ represents the values obtained using Equation (2), and $B_{true}$ denotes the ground truth measured with Hall sensors.

This suggests the benefit of opting for a greater T to minimize the force estimation error. As mentioned before, an increase in T leads to a decrease of the tactile sensor's sensitivity, and therefore, there is a need to strike a balance between sensitivity and force estimation error tailored to specific applications.

In an improved version of the tactile sensor 100, the bottom layer 200 can comprise a plurality of superimposed supports 210, each support 210 being provided with one magnetic sensor 220 configured to detect a change in magnetic field. The magnetic sensors of the supports 210 are all superimposed on one another.

In this improved version of the tactile sensor 100, each support 210 is a flexible PCB. This improved version allows to improve the resolution of the tactile sensor 100.

The tactile sensor 100 as described above with one magnetic sensor 220 works as a single taxel.

In an improved configuration of the tactile sensor 100, the tactile sensor can be extended to the form of sensor arrays with multiple taxels.

In this case, the bottom layer 200 comprises a support 210 provided with a plurality of magnetic sensors 220, each magnetic sensor 220 being configured to detect a change in magnetic field. The top layer 400 has a magnetization pattern arranged to face each magnetic sensor 220 of the bottom layer 200.

Each unit comprising a magnetic sensor associated with a magnetization pattern forms a taxel.

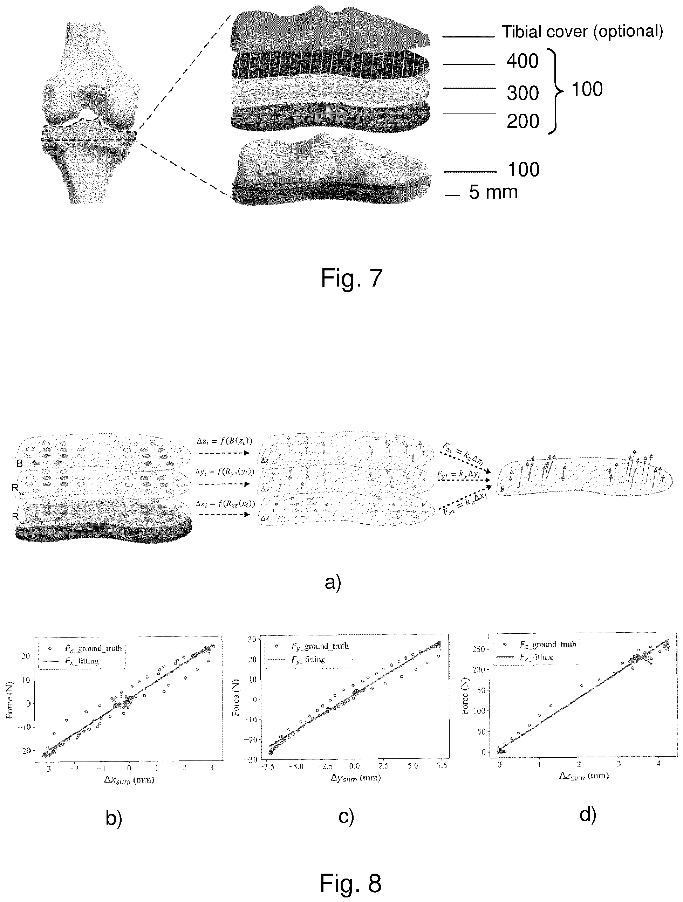

The magnetic sensors 220 of the bottom layer 200 can be positioned on the support 210 as a matrix, for example a $3 \times 3$ array, or according to a random placement as illustrated in figure 7.

Figure 7 illustrates the schematic illustration of the tactile sensor structure in a specific configuration: a tibia-shaped sensor designed for knee force distribution measurements.

Such a tactile sensor 100 with multiple taxels can advantageously be used in applications that require sensor scalability and large sensing areas. For example, the tactile sensor may be applied for sensing an object or a tactile input, which may involve tracking a motion of an object corresponding to external forces applied on the top layer 400 by the object during a predetermined period of time, by processing a magnetic flux density of multiple neighbouring taxels in the magnetic sensor around the position of the pressing force applied to the top layer 400.

3D force distribution measurement

Expanding upon the force decoupling method introduced previously, the transition from a single taxel to a full sensor array is simple. To derive the 3D force distribution map, the tibia-shaped sensor array is taken as an example (see figure 7). Using the raw sensor outputs in terms of three-axis magnetic flux densities (see the left drawing in view a) of figure 8), the magnetic strength B and the magnetic ratios $R_{xz}$ and $R_{yz}$ for each individual taxel $s_i$ (with i ranging from 1 to $N_s$, where $N_s$ is the total number of taxels) is first computed. This allows determining the displacement components $\Delta x_i$, $\Delta y_i$, and $\Delta z_i$ for each taxel in response to an external force F; these components can be derived from $R_{xz}$, $R_{yz}$, and B values, respectively using Equation (2) (see the middle drawing in view a) of figure 8). Then, a three-dimensional force distribution map is generated by combining the force components $F_{xi}$, $F_{yi}$, and $F_{zi}$ for each taxel (see the right drawing in view a) of figure 8); these components can be described as $k_x\Delta x_i$, $k_y\Delta y_i$, and $k_z\Delta z_i$ based on Hooke's law, where $k_x$, $k_y$, and $k_z$ represent the stiffness coefficients of the sensor's intermediate layer 300 along x, y, and z directions, respectively.

It is noted, following equation 2, that the relationship between the magnetic ratio $R_{xz}$ and the magnet's position $x_i$ for all taxels during calibration follows a similar behavior (i.e., this relationship follows a continuous function that is superimposable for every position), despite each taxel presenting a distinct working range. This behavior facilitates the calibration process, avoiding undergoing it multiple times repeatedly. The same behavior can be obtained for the magnetic ratio $R_{yz}$ and the magnet's position $y_i$ as well as for the magnetic strength B and the magnet's position $z_i$.

The stiffness coefficients $k_x$, $k_y$, and $k_z$ can be estimated and calibrated by evaluating the slope of the force-displacement curve (refer to views b), c) and d) of figure 8), using force readings from an ATI FIT sensor as the ground truth. The ATI FIT sensor used is the ATI Mini45 FIT sensor (from ATI Industrial Automation, Apex, NC, USA). View b) of figure 8 shows the calibration curve of the shear force $F_x$, where $\Delta x_{sum}$ represents the cumulative displacement component $\Delta x_i$ across all taxels. View c) of figure 8 shows the calibration curve of the shear force $F_y$, where $\Delta y_{sum}$ represents the cumulative displacement component $\Delta y_i$ across all taxels. View d) of figure 8 shows the calibration curve of the shear force $F_z$, where $\Delta z_{sum}$ represents the cumulative displacement component $\Delta z_i$ across all taxels.

In an improved version of the tactile sensor 100 with multiple taxels, the bottom layer 200 can comprise a plurality of superimposed supports 210, each support 210 being provided with a plurality of magnetic sensors 220 configured to detect a change in magnetic field. Each magnetic sensor of a support 210 is superimposed on a magnetic sensor of the other supports. Each support 210 is a flexible PCB.

Examples of applications

Three tactile sensors, each with distinct shapes, sizes and key parameters have been developed to demonstrate their versatility across three different applications:

- measuring the force distribution on an artificial knee joint,
- teaching robots by means of human physical demonstration (e.g., to make coffee)
- monitoring the interaction forces in knee braces.

For the three tactile sensors 100, a same thickness h of the intermediate layer 300 is used, as its impact on both sensitivity and measurement range is less significant compared to that of elastic modulus E and period T, as demonstrated in views a) and b) of figure 4. This allows for flexibility in designing h to suit various applications, provided the magnetic field remains detectable and is not diminished to zero, as indicated by the attenuation curve in view c) of figure 4.

Fabrication of the tactile sensor used for the three applications

The top layer 400 is fabricated with two flexible magnetic films 410, 420. Each flexible magnetic film of the top layer is made separately.

Each flexible magnetic film 410, 420 is made through mold coasting of a mixture of neodymium (NdFeB) magnetic powders and polydimethylsiloxane (SYLGARD 184, Dow Corning) substrate at a weight ratio of 3.5:1.

After curing at 80°C for 2 hours, each flexible magnetic film is magnetized using a strong rotating magnetic field generated by a pulse magnetizer (mainly composed of parallel coils and capacitors) operating at 1.5 kV.

Then the two flexible magnetic films 410, 420 are bonded using a silicone adhesive commercially available under the name Sil-Poxy (Smooth-on Inc.), aligning their magnetization patterns orthogonal to each other.

For a single tactile sensor (one taxel), the intermediate layer used is made of Ecoflex 00-50 (Smooth-on Inc.). For an array sensor (multi-taxels), the intermediate layer used is made of Dragon Skin 20 (Smooth-on Inc.).

Then, the intermediate layer 300 is assembled with the bottom layer 200.

For a single tactile sensor (one taxel), the bottom layer 200 is made with a flexible PCB.

For an array tactile sensor (multi-taxels), the bottom layer 200 is made with a hard PCB. The magnetic sensor(s) is(are) Hall sensor(s).

This intermediate layer 300 is directly poured onto the PCB and cured at room temperature for 4 hours.

Alternatively, the intermediate layer 300, previously carried out, is bonded to the PCB using the silicone adhesive Sil-Poxy.

Finally, the top layer 400 (the two superimposed flexible magnetic films) is assembled with the intermediate layer 300.

The top layer 400 is bonded to the intermediate layer 300 using the silicone adhesive Sil-Poxy. For ease of replacement, double-sided tape (such as the 3M VHB series) could serve as an alternative.

The Hall sensor(s) (MLX90393) used for measuring the magnetic field is commercially available from Melexis (Belgium), whose sensitivity can be programmed with two parameters: GAIN_SEL (ranging from 0 to 7) and RES_XYZ (ranging from 0 to 3). For the following applications, GAIN_SEL = 5 is selected, which is optimal for detecting magnetic fields of moderate strength, and RES_XYZ = 0 is selected to achieve maximum sensitivity. This configuration results in a sensitivity of 0.25 $\mu$T/LSB in the x and y directions and 0.403 $\mu$T/LSB in the z direction.

The spatial resolution of the tactile sensor is determined by the center-to-center distance between adjacent Hall sensors. However, to achieve a symmetrical measurement range of shear forces for each taxel, it is necessary to align the center of each Hall sensor with the center of a magnetic pole on the film. This alignment requires the spacing between two adjacent Hall sensors to be an integral multiple of the magnetic period T.

Calibration of the tactile sensor

The self-decoupling property of the tactile sensor facilitates the fast and independent calibration of the three force components ($F_x$, $F_y$, and $F_z$). First, the tactile sensor 100 is attached to a ground truth F/T sensor ATI Mini45 (ATI Industrial Automation, Apex, NC, USA) via a 3D-printed connector. Then a planar indenter is gradually pressed onto the sensor to exert the normal force $F_z$, during which the outputs of both the tactile sensor 100 and the ATI Mini45 are recorded for subsequent curve fitting. Following this, to generate shear forces $F_x$ and $F_y$, the indenter is manually shifted along the x and y axes, respectively, with a normal force concurrently applied to prevent any slippage.

Application 1: Measuring the force distribution on an artificial knee joint

For the knee joint application, high sensitivity is considered as not critical but the measurement range is considered essential.

The tibia-shaped sensor (see figure 7) is shaped with h=3 mm, E=337.86 kPa (Dragon Skin 20), and T= 8 mm. These parameters result in sensitivities of 0.002 kPa$^{-1}$ for $F_z$, 0.029 kPa$^{-1}$ for $F_x$, and 0.01 kPa$^{-1}$ for $F_y$, as well as a measurement range of 260 N for $F_z$, $\pm$23 N for $F_x$ and $\pm$27 N for $F_y$.

The spatial resolution of the tactile sensor is approximately 8 mm.

The sensing area of the tactile sensor is 3038.67 mm$^2$.

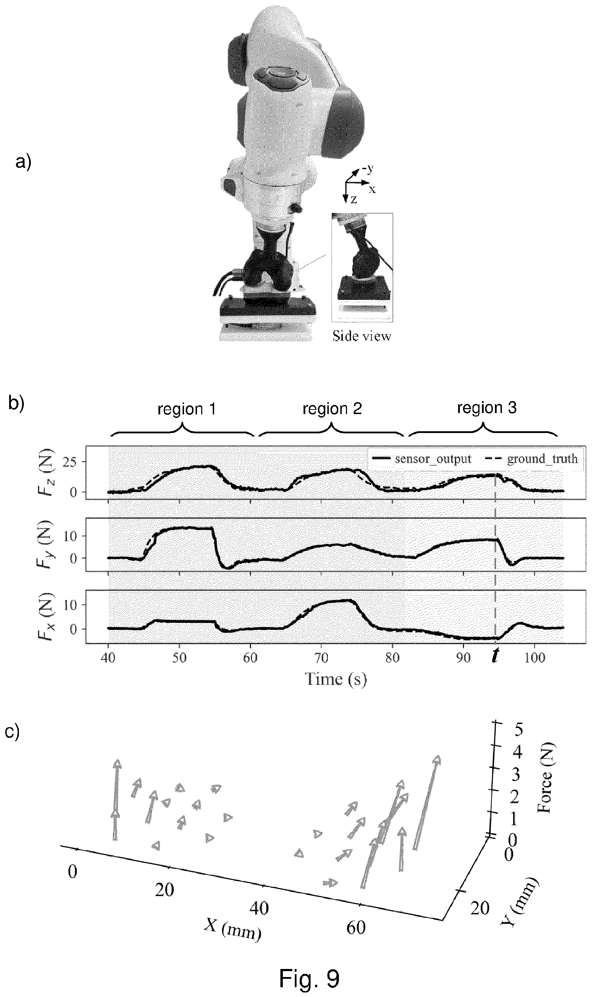

For the knee force distribution measurement task, the tactile sensor (figure 7) is incorporated into an artificial tibia to measure knee 3D force distribution (see view a) of Figure 9). The tactile sensor is mounted on a 3D-printed tibia, replicating the lower part of an intact tibia with the top 18.4 mm section removed. Below this modified tibia, the ATI Mini45 FIT sensor is connected using 3D-printed connectors to provide ground truth force measurements.

To simulate human knee movements, such as extension and flexion, a 3D-printed femur, attached to a robot, commercially available under the name Franka Emika Panda robot, is maneuvered to perform both translational and rotational movements on the tibia (to which is attached the tactile sensor). In this setup, the robot's trajectory is currently manually configured using mc_rtc, an open-source universal robot control framework.

The robot-actuated artificial femur is used to emulate the translational and rotational movements typical of a human knee. During knee flexion (or extension), the femur rolls along the x axis and slides along the y axis on the tibial cover. The resultant normal force $F_z$ and shear force $F_y$ increase from zero to 18.1 N, and 13.4 N, respectively (as shown in region 1 of the view b) of figure 9). A minor increase in the shear force $F_x$ is also observed due to the small lateral motion of the knee. When the translational movement is reduced along y axis (backwards) and increased along x axis (leftwards), a decrease of the peak shear force $F_y$ (from 13.4 N to 5.5 N) and an increase of $F_x$ (from 3.1 N to 10.4 N) is observed accordingly, as shown in region 2 of the view b) of figure 9. Conversely, as the femur slides rightwards along the x-axis, $F_x$ increases oppositely to - 4.1 N (as shown in region 3 of the view b) of figure 9).

As shown in view b) of figure 9, the tactile sensor's force measurements correspond closely with the ground truth. This validates the accuracy of the force decoupling model. View c) of figure 9 presents the 3D force distribution map during knee flexion at time t, providing detailed force magnitude and direction at each taxel.

Application 2: Teaching robots by means of human physical demonstration (e.g., to make coffee)

For the robot teaching application, high sensitivity to gentle human touch is considered as crucial to facilitate effortless robot control.

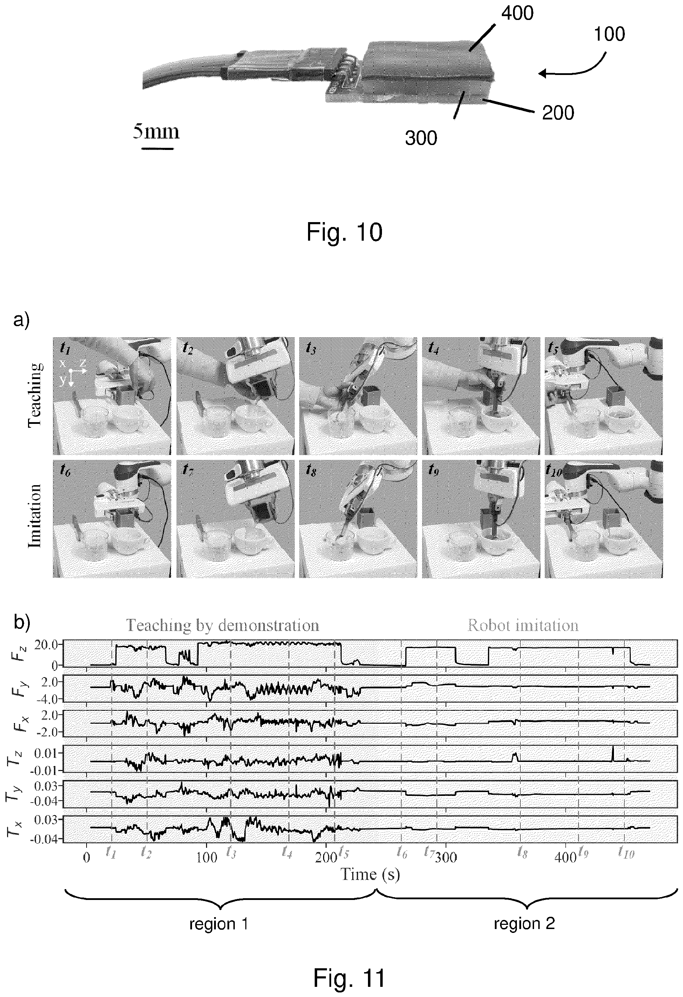

The tactile sensor 100 is a 3x3 Hall sensor. The tactile sensor 100 is illustrated in figure 10.

The sensor is shaped with h=3 mm, E=82.74 kPa (Ecoflex 00-50), and T= 6 mm. This configuration achieves a higher sensitivity (0.01 kPa$^{-1}$ for $F_z$, 0.029 to 0.15 kPa$^{-1}$ for $F_x$, and 0.006 to 0.042 kPa$^{-1}$ for $F_y$), paired with a lower yet sufficient measurement range (28 N for Fz, $\pm$8 N for $F_x$ and $F_y$).

The spatial resolution of the tactile sensor 100 is approximately 6 mm.

The sensing area of the tactile sensor 100 is 441 mm$^2$.

With the tactile feedback provided by the tactile sensor, a robot can be effortlessly taught to perform complex tasks by physical demonstration. View a) of figure 11 illustrates a robot being taught to make coffee.

One of the fingers of a robotic gripper (FE Gripper for Franka Emika Panda robot) is equipped with the tactile sensor 100. When a human operator applies varying forces along different directions on the sensor, the six-axis force/torque signals captured by the tactile sensor 100 are translated into corresponding robot movements using impedance control. During this process, the robot's taught trajectories are recorded, enabling motion repetition in the imitation phase. The robot's movement speed along each axis is tuned to be proportional to the magnitude of each force and torque component, with adjustable linear gains to regulate the overall speed. By dynamically altering these gains during the task, more complex and delicate movements are achievable. For instance, when a force component is detected below 1 N, the gain is set low for very slow robot motion, aiding in precise adjustments, like fine-tuning the gripper's position before gripping a cup or spoon. Conversely, a larger gain is employed for faster movements when the force exceeds 1 N. Moreover, the signals can be programmed to control the gripper's movements. In the setup, if the sensor detects four times of sign changes in $F_y$ (i.e., pressing the sensor and moving the finger up and down twice) within two seconds, the gripper interprets this as a "close" command. Similarly, four times of sign changes in $T_z$ (i.e., shaking the gripped object twice) within two seconds are translated into an "open" command. Such programmable functionality with soft tactile sensors could potentially open the door to more flexible and intricate robot teaching tasks.

During the teaching phase gentle pressure and sliding movements are applied to the sensor, generating six-axis force and torque signals (highlighted in region 1 of view b) of figure 11). These signals guide the robot's corresponding six-axis movements, with adjustable gains for speed control. The robot is instructed to execute tasks such as closing the gripper, pouring water into a cup, scooping coffee powder, stirring, and placing the spoon back, sequentially from t1 to t5. In the imitation phase (region 2 of view b) of figure 11), the robot autonomously replicates these steps to make coffee without human intervention, from t6 to t10. Compared to traditional bulkier and expensive force/torque sensors, the tactile sensor, much lighter, could provide enhanced sensitivity and flexibility, thus facilitating more precise and delicate object manipulation and interaction, especially in complex tasks.

Application 3: Monitoring the interaction forces in knee braces

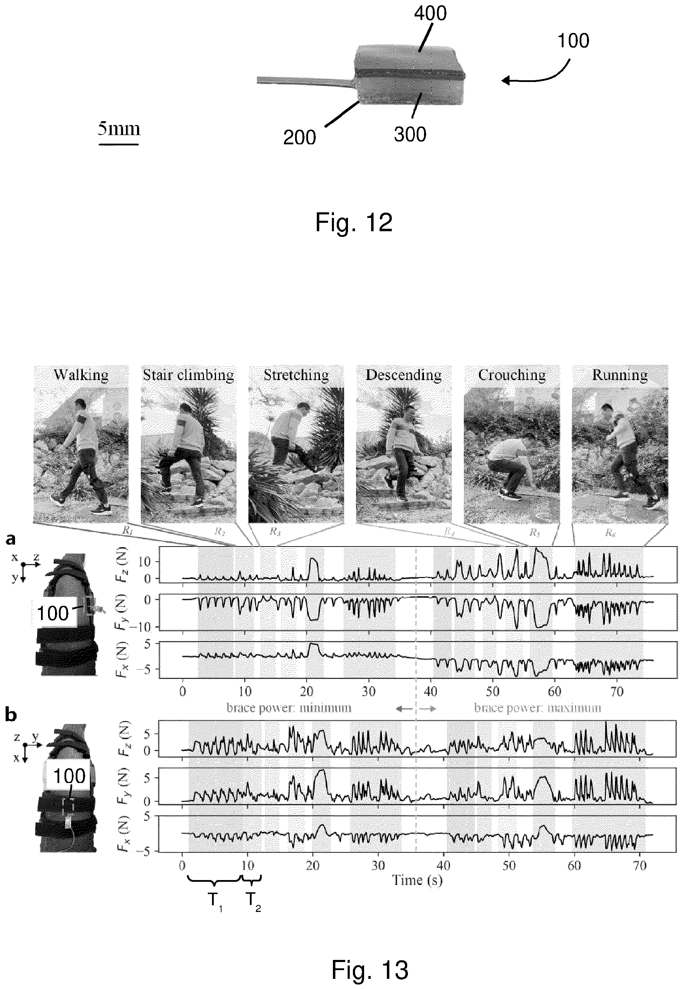

For the knee brace force monitoring application, the tactile sensor 100 is required to be smaller for seamless integration into the brace, yet it still needs to maintain a moderate sensitivity and measurement range. The tactile sensor 100 is a single sensor (single taxel). The tactile sensor 100 is illustrated in figure 12.

The tactile sensor 100 is shaped with h=3 mm, E=337.86 kPa (Dragon Skin 20), and T= 6 mm. This offers a balanced combination of the sensitivity ($0.002\,kPa^{-1}$ for $F_z$, $0.039\,kPa^{-1}$ for $F_x$, and $0.01\,kPa^{-1}$ for $F_y$) and the measurement range (31 N for $F_z$, $\pm 10$ N for $F_x$ and $F^y$). A flexible PCT is used as support 210.

The sensing area of the tactile sensor 100 is 225 mm$^2$.

For the knee brace (or orthosis) force monitoring task, the tactile sensor of figure 12 is affixed to either the side (view a) of figure 13) or beneath the top strap (view b) of figure 13) of the knee brace (Spring Loaded OA) using double-sided tape (3M VHB 5952). This ensures stable attachment during knee brace use as well as easy removal and reapplication in different positions on the brace. The knee brace, along with the tactile sensor, is secured to the user leg using four Velcro® straps, allowing for convenient adjustment of the tightness between the brace and the user's leg. Wireless data transmission between the sensor and a PC during human activities is facilitated by a microcontroller equipped with a Bluetooth module (ESP32-E), powered by a portable 5V battery. The spring power of the brace can be adjusted using the power dial located on the right side of the brace.

By using a flexible PCB, the tactile sensor 100 can be integrated into a knee brace to monitor the interaction forces between the brace and the human leg. The tactile sensor responds distinctly to different activities such as walking, stair climbing, crouching, and running. For instance, during activities like stair climbing (or descending) and crouching, where the knee bends more compared to walking (see region $R_1$ of view a) of figure 13), the sensor measures a larger force magnitude (see regions $R_2$, $R_4$, and $R_5$ of view a) of figure 13). As the leg stretches (see region $R_3$ of view a) of figure 13), the shear force $F_y$ is seen to increase in the opposite direction as the knee extends. In running (see region $R_6$ of view a) of figure 13), both the magnitude and frequency of the sensor's response change significantly. Furthermore, the tactile sensor responses with the knee brace's spring power set at both minimum and maximum were analyzed. Notably, there is a substantial increase in measured force when the brace's spring power is at its maximum (i.e., time range $T_2$ in figure 13) compared to when it is at zero (i.e., time range $T_1$ in figure 13). This is expected, as more force is required to counteract the brace's resistance during knee bending. When the tactile sensor's position is shifted from the side of the brace to underneath the top strap, similar signal patterns are observed, but with a reduced peak response, as seen in view b) of figure 13.

Many other applications can be envisaged, such as adaptive grasping of an egg. The tactile sensor can also be integrated in the sole of a shoe or in the sole of a humanoid robot.

The above description clearly illustrates that, through its various features and their advantages, the present invention achieves its objectives. In particular, the present invention proposes a tactile sensor that can self-decouple the three-axis forces with customizable sensitivity and measurement range. The tactile sensor with its self-decoupling capability mimics the force sensing abilities of human skin. The proposed self-decoupling mechanism not only simplifies the tactile sensor structure but also eases the fabrication and calibration processes, which reduces the calibration complexity from a quadratic ($N^2$) or cubic ($N^3$) scale to a linear ($3N$) scale.

**Claims**

**1.** Tactile sensor (100) comprising three superimposed layers:

- a bottom layer (200) comprising a support (210) provided with a magnetic sensor (220) configured to detect a change in magnetic field;
- a top layer (400) comprising at least one flexible magnetic film (410,420), and
- an intermediate layer (300) between the bottom layer (200) and the top layer (400), said intermediate layer being flexible,

the tactile sensor (100) being configured so that, when an external force is applied on the top layer (400), said top layer is deformed, this deformation causing changes in the magnetic field that can be detected by the magnetic sensor (220), **characterized in that** the top layer (400) has a magnetization pattern arranged to face the magnetic sensor (220), and said magnetization pattern is arranged to correspond to the sum of two magnetization patterns arranged in a Halbach array and orthogonal to each other.

2.  Tactile sensor (100) according to claim 1, **characterized in that** the top layer (400) comprises two superimposed flexible magnetic films (410, 420), each flexible magnetic film being a sinusoidally magnetized magnetic film whose magnetization pattern is arranged in a Halbach array, and the magnetization pattern of the two flexible magnetic films being orthogonal to each other.

3.  Tactile sensor (100) according to any one of claims 1 to 2, **characterized in that** the bottom layer (200) is a flexible layer.

4.  Tactile sensor (100) according to claim 3, **characterized in that** the bottom layer (200) comprises a plurality of superimposed supports (210), each support (210) being provided with a magnetic sensor (220) configured to detect a change in magnetic field, the magnetic sensors (220) of the supports (210) being superimposed on one another.

5.  Tactile sensor (100) according to any one of claims 1 to 4, **characterized in that** each flexible magnetic film (410, 420) of the top layer (400) is made from magnetic powders dispersed within a deformable material.

6.  Tactile sensor (100) according to any one of claims 1 to 5, **characterized in that** the bottom layer (200) comprises a support (210) provided with a plurality of magnetic sensors (220), each magnetic sensor (220) being configured to detect a change in magnetic field, the top layer (400) having a magnetization pattern arranged to face each magnetic sensor (220).

7.  Tactile sensor (100) according to any one of claims 1 to 6, **characterized in that** the support (410) of the bottom layer (400) is a hard printed circuit board.

8.  Tactile sensor (100) according to any one of claims 1 to 6, **characterized in that** the support (410) of the bottom layer (400) is a flexible printed circuit board.

9.  Tactile sensor (100) according to any one of claims 1 to 8, **characterized in that** the intermediate layer (300) is made with an elastomer material.

10. Use of the tactile sensor (100) according to any one of claims 1 to 9 to measure the force distribution on an artificial knee joint.

11. Use of the tactile sensor (100) according to any one of claims 1 to 9 to teach a robot by means of human physical demonstration.

12. Use of the tactile sensor (100) according to any one of claims 1 to 9 to monitor the interaction forces in knee braces.

100

F

400

300

200 → 220

210

a)

100

420 410

400

300

200 → 220

210

b)

Z

Y X

Fig. 1

400

200 → PCB

F

Fig. 2

Fig. 3

a)

b)

c)

Fig. 4

Fig. 5

a)

b)

Fig. 6

Fig. 7

a)

b)  c)  d)

Fig. 8

Fig. 9

Fig. 10

Fig. 11

Fig. 12

Fig. 13

Europäisches
Patentamt

European
Patent Office

Office européen
des brevets

# EUROPEAN SEARCH REPORT

**Application Number**

EP 24 30 6907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIN GUOHENG ET AL: "Dual-mode flexible sensor based on magnetic film for wearable smart finger sleeve", SMART MATERIALS AND STRUCTURES, IOP PUBLISHING LTD., BRISTOL, GB, vol. 33, no. 9, 23 August 2024 (2024-08-23), XP020510488, ISSN: 0964-1726, DOI: 10.1088/1361-665X/AD6ECF [retrieved on 2024-08-23] * column 5, line 43 - column 10, line 16; figures * ----- | 1-12 | INV. G01L1/12 G01L5/22 |
| A | US 11 668 554 B2 (UNIV CITY HONG KONG [HK]; UNIV HONG KONG [HK]; VERSITECH LTD [HK]) 6 June 2023 (2023-06-06) * the whole document * ----- | 1-12 | |

**TECHNICAL FIELDS SEARCHED (IPC)**

G01L

The present search report has been drawn up for all claims

| Place of search | Date of completion of the search | Examiner |
|---|---|---|
| The Hague | 31 March 2025 | Amroun, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6907

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | | Publication date | Patent family member(s) | Publication date |
|---|---|---|---|---|
| US 11668554 | B2 | 06-06-2023 | NONE | |

For more details about this annex : see Official Journal of the European Patent Office, No. 12/82

EPO FORM P0459